# FASCICULE DE BREVET EUROPEEN

(11) **EP 3 350 002 B1**
(45) Date de publication et mention de la délivrance du brevet: **17.06.2020**
(21) Numéro de dépôt: 16766964.7
(22) Date de dépôt: 16.09.2016
(51) Int. Cl.: B60J 5/10, B60J 5/12

(54) **SYSTÈME D'OUVERTURE DE HAYON À DEUX BIELETTES**
HECKKLAPPENÖFFNUNGSSYSTEM MIT ZWEI PLEUELSTANGEN
TAILGATE OPENING SYSTEM HAVING TWO CONNECTING RODS

(30) Priorité: 17.09.2015 FR 1558765
(43) Date de publication de la demande: 25.07.2018
(73) Titulaire: Flex-N-Gate France, 25405 Audincourt (FR); Faurecia Exteriors GmbH, 31655 Stadthagen (DE)
(72) Inventeur: LAURENT, Claude, 25420 Voujeaucourt (FR); BOIS, Frédéric, 67100 Strasbourg (FR); GROS, Virgile, 95150 Taverny (FR)
(74) Mandataire: Lavoix
(86) Numéro de dépôt international: PCT/EP2016/072036
(87) Numéro de publication internationale: WO 2017/046367

(56) Documents cités:
- WO-A1-2006/097082
- GB-A- 2 264 533
- US-A1- 2014 175 828

## Description

La présente invention concerne un ensemble arrière de véhicule comprenant :
- une structure de caisse, la structure de caisse délimitant une ouverture comprenant au moins un premier bord latéral de l'ouverture et un deuxième bord latéral de l'ouverture,
- un hayon, le hayon étant mobile par rapport à la structure de caisse entre au moins une position d'ouverture, dans laquelle l'ouverture de la structure de caisse est accessible, et une position de fermeture, dans laquelle le hayon ferme l'ouverture de la structure de caisse , le hayon comprenant au moins un premier bord latéral de hayon et un deuxième bord latéral de hayon, et
- un dispositif d'ouverture et de fermeture, le dispositif d'ouverture et de fermeture comprenant au moins une première bielle et une deuxième bielle fixant le hayon à la structure de caisse, lesdites première et deuxième bielles étant chacune articulées à une première extrémité à la structure de caisse et à une seconde extrémité au premier bord de hayon.

Un tel ensemble est connu de WO 2006/097082, qui est considéré comme l'art antérieur le plus proche et décrit les caractéristiques du préambule de la revendication 1. Ledit ensemble est notamment destiné à donner accès au coffre d'un véhicule automobile par l'ouverture du hayon. Un utilisateur du véhicule automobile peut ainsi facilement charger et décharger, par exemple, des objets encombrants par l'arrière du véhicule en ouvrant le hayon.

Un tel hayon s'ouvre, généralement, par rotation du hayon autour d'une charnière placée entre le bord supérieur de l'ouverture et le bord supérieur du hayon. Le hayon passe ainsi d'une position de fermeture, sensiblement parallèle au plan de l'ouverture de la structure de caisse, à une position d'ouverture, sensiblement perpendiculaire au plan de l'ouverture de la structure de caisse, dans laquelle le hayon s'étend au-dessus de la tête de l'utilisateur.

De tels systèmes ne donnent donc pas entière satisfaction, car ils nécessitent une place importante au-dessus et derrière le véhicule, et présentent des risques de chocs avec l'environnement, qui sont la cause de dommages au véhicule. De plus, un hayon muni d'un tel système est susceptible de heurter par mégarde l'utilisateur. Il est donc nécessaire de développer des systèmes d'ouverture de hayon avec des cinématiques d'ouverture moins amples et dans lesquelles le hayon est moins encombrant en position d'ouverture.

Un des buts de l'invention est de fournir un ensemble arrière de véhicule dont le dispositif d'ouverture et de fermeture du hayon présente une cinématique nécessitant moins d'espace autour du véhicule et comportant des mouvements moins amples.

A cet effet, l'invention a pour objet un ensemble du type précité, dans lequel la première biellette comprend, de sa première extrémité à un premier point intermédiaire, un premier tronçon sensiblement rectiligne, du premier point intermédiaire à un deuxième point intermédiaire, un tronçon courbe, et du deuxième point intermédiaire à la seconde extrémité, un deuxième tronçon sensiblement rectiligne, les deux tronçons rectilignes formant des angles aigus avec les tangentes au tronçon courbe en leurs points de contact avec le tronçon courbe, le premier tronçon rectiligne se trouvant du coté concave du tronçon courbe et le deuxième tronçon rectiligne se trouvant du coté convexe du tronçon courbe.

En prévoyant que le dispositif d'ouverture et de fermeture comprend deux biellettes remplaçant la charnière, on assure une cinématique d'ouverture nécessitant le minimum d'espace et présentant peu de risques de chocs en cours d'utilisation tout en garantissant un accès optimal à l'intérieur du véhicule, le hayon pouvant passer au-dessus du toit du véhicule dans la position d'ouverture. Un tel dispositif est de plus robuste et simple à mettre en œuvre, et présente des coûts de fabrication raisonnables.

L'ensemble selon l'invention peut comprendre une ou plusieurs des caractéristiques suivantes, prise(s) isolément ou suivant toute combinaison techniquement possible :
- la première biellette et la deuxième biellette sont décalées le long du premier bord latéral de l'ouverture ;
- le premier tronçon sensiblement rectiligne et le deuxième tronçon sensiblement rectiligne de la première biellette forment des angles aigus avec les tangentes au tronçon sensiblement courbe respectivement au premier point intermédiaire et au deuxième point intermédiaire ;
- la première biellette présente des angles arrondis au niveau des points intermédiaires entre le tronçon sensiblement courbe et les premier et deuxième tronçons sensiblement rectilignes ;
- le dispositif d'ouverture et de fermeture comprend une troisième biellette et une quatrième biellette, la troisième biellette et la quatrième biellette étant fixées entre la structure de caisse et le deuxième bord latéral de hayon, la troisième biellette ayant une forme identique à la forme de la première biellette et la quatrième biellette ayant une forme identique à la forme de la deuxième biellette ;
- une des première et deuxième biellette est munie de moyens de motorisation propres à commander la rotation de la première ou deuxième biellette autour de sa première extrémité, articulée à la structure de caisse ;
- les secondes extrémités des première et deuxième biellettes sont coulissantes sur un rail fixé sur le hayon, sensiblement parallèle au premier bord de hayon, ledit rail étant sensiblement parallèle au plan de l'ouverture en position de fermeture du hayon ;
- la première biellette contourne au moins en partie le bord supérieur de l'ouverture en position d'ouverture ; et
- la structure de caisse et le hayon ne sont reliés que par le dispositif d'ouverture et de fermeture.

L'invention sera mieux comprise à la lecture de la description qui va suivre, donnée uniquement à titre d'exemple, et faite en référence aux dessins annexés, sur lesquels :
- la Figure 1 est une représentation schématique en coupe, suivant un plan longitudinal passant par l'arrière du véhicule, de l'ensemble arrière selon l'invention, le hayon étant en position de fermeture,
- la Figure 2 est une représentation schématique en coupe de l'ensemble arrière de la Figure 1, le hayon étant dans une position intermédiaire entre la position de fermeture et la position d'ouverture,
- la Figure 3 est une représentation schématique en coupe de l'ensemble arrière de la Figure 1, le hayon étant en position d'ouverture,
- la Figure 4 est une représentation de coté de la première biellette.

Dans tout ce qui suit, les orientations sont les orientations habituelles d'un véhicule automobile. En particulier, les termes « supérieur », « inférieur », « gauche », « droit », « au-dessus », « en-dessous », « vers l'avant » et « vers l'arrière » s'entendent généralement par rapport au sens normal de circulation du véhicule automobile et à la position du conducteur.

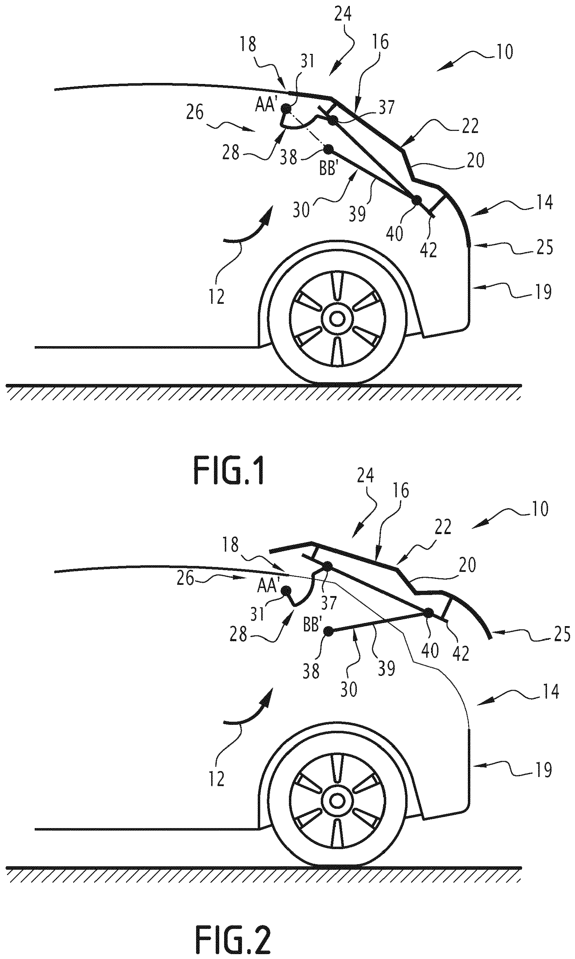

Un ensemble arrière 10 de véhicule est représenté sur les Figures 1 à 3.

L'ensemble arrière 10 comprend une structure de caisse 12.

La structure de caisse 12 délimite une ouverture 14.

L'ouverture 14 est propre à donner l'accès à l'intérieur d'une partie arrière du véhicule, par exemple le coffre et/ou la plage arrière du véhicule, depuis l'extérieur du véhicule.

L'ouverture 14 comprend au moins un premier bord latéral de l'ouverture 16 et un deuxième bord latéral de l'ouverture (non représenté), formés par des montants de la structure de caisse 12.

Le premier bord latéral de l'ouverture 16 s'étend sensiblement selon une direction d'élévation du véhicule et est situé, par exemple, à gauche du véhicule.

Par symétrie, le deuxième bord latéral de l'ouverture s'étend sensiblement selon une direction d'élévation du véhicule et est situé, par exemple, à droite du véhicule.

L'ouverture 14 comprend, en outre, un bord supérieur de l'ouverture 18, s'étendant, par exemple, entre le toit du véhicule et les bords latéraux de l'ouverture 14, et un bord inférieur de l'ouverture 19, s'étendant, par exemple, entre le plancher du véhicule et les bords latéraux de l'ouverture 14.

L'ensemble arrière 10 comprend également un hayon 20.

Un tel hayon 20 est classique dans un véhicule automobile et comprend, par exemple, des surfaces vitrées, des optiques arrière de véhicule, etc.

Le hayon 20 comprend au moins un premier bord latéral de hayon 22, un deuxième bord latéral de hayon (non représenté), un bord supérieur de hayon 24 et un bord inférieur de hayon 25.

Le hayon 20 est mobile par rapport à la structure de caisse 12 entre au moins une position d'ouverture et une position de fermeture.

Dans la position de fermeture, telle que représentée sur la Figure 1, l'ouverture 14 de la structure de caisse 12 est isolée de l'environnement extérieur du véhicule. Le premier bord latéral de hayon 22 et le deuxième bord latéral de hayon sont alors respectivement appuyés contre le premier bord latéral de l'ouverture 16 et le deuxième bord latéral de l'ouverture, et le bord supérieur de hayon 24 et le bord inférieur de hayon 25 sont respectivement appuyés contre le bord supérieur de l'ouverture 18 et le bord inférieur de l'ouverture 19.

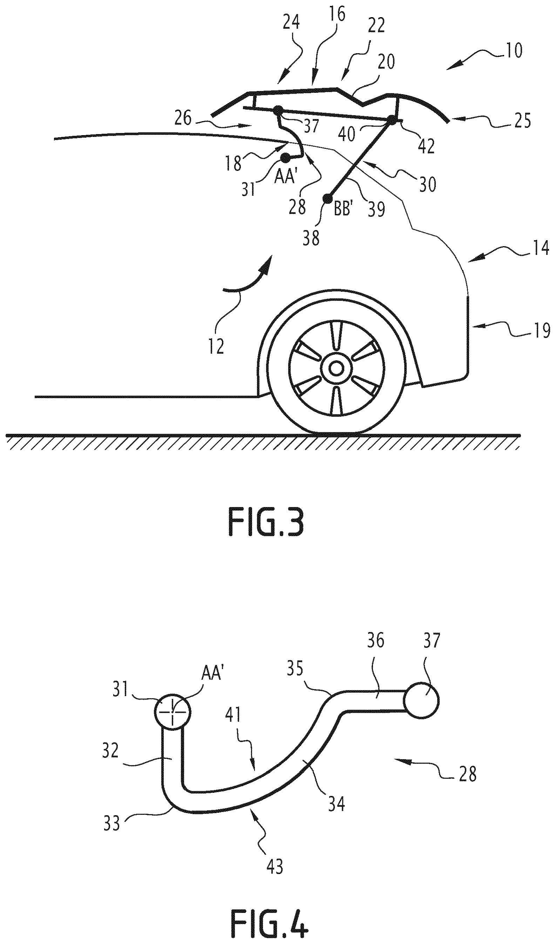

Dans une position d'ouverture, telle que représentée sur la Figure 3, l'ouverture 14 de la structure de caisse 12 est accessible depuis l'extérieur du véhicule. Le premier bord latéral de hayon 22 et le deuxième bord latéral de hayon sont alors en regard toit du véhicule.

L'ensemble arrière 10 comprend en outre un dispositif d'ouverture et de fermeture 26.

Le dispositif d'ouverture et de fermeture 26 fixe le hayon 20 à la structure de caisse 12.

Plus particulièrement, le dispositif d'ouverture et de fermeture 26 forme la seule fixation du hayon 20 à la structure de caisse 12, c'est-à-dire qu'il n'y a pas d'autre élément de fixation assurant la fixation du hayon 20 sur la structure de caisse 12. L'ensemble arrière 10 selon l'invention est ainsi dépourvu d'articulation directe entre le bord supérieur de hayon 24 et le bord supérieur de l'ouverture 18 de la structure de caisse 12, au contraire des hayons classiques de véhicule automobile. Le dispositif d'ouverture et de fermeture 26 est alors adapté pour maintenir le hayon 20 fermé en cas de choc. Alternativement, le dispositif 26 comprend, en outre, une serrure de fermeture située au niveau du bord inférieur 25 du hayon 20 et adaptée pour coopérer avec un organe de maintien fixé à la structure de caisse 12. La serrure permet d'assurer un maintien du hayon 20 sur la structure de caisse 12 en cas de choc. Le hayon 20 peut comprendre également deux crochets de maintien situés respectivement au niveau supérieur des premier 16 et deuxième bords latéraux du hayon 20 et adaptés pour s'engager avec le hayon 20 et assurer son maintien sur la structure de caisse 12 en position de fermeture.

Comme illustré par les Figures 1 à 3, le dispositif d'ouverture et de fermeture 26 comprend une première biellette 28 et une deuxième biellette 30.

La première biellette 28 est représentée sur la Figure 4, et comporte une première extrémité 31 et une seconde extrémité 37. Entre ces extrémités (31 ; 37), la première biellette 28 comprend :
- un premier tronçon rectiligne 32, s'étendant de manière sensiblement rectiligne entre la première extrémité 31 et un premier point intermédiaire 33 ;
- un tronçon courbe 34, s'étendant de manière sensiblement courbe entre le premier point intermédiaire 33 et un second point intermédiaire 35 ;
- un deuxième tronçon rectiligne 36, s'étendant de manière sensiblement rectiligne entre le deuxième point intermédiaire 35 et la seconde extrémité 37.

La première extrémité 31 de la première biellette 28 est munie d'une liaison de type pivot propre à articuler la première biellette 28 en rotation par rapport à la structure de caisse 12. La seconde extrémité 37 de la première biellette 28 est munie d'une liaison de type pivot propre à articuler la première biellette 28 au hayon 20.

Le tronçon courbe 34 a par exemple la forme d'un arc de cercle ou d'un arc elliptique, présentant un côté concave 41 et un côté convexe 43. Le premier tronçon rectiligne 32 se situe du côté concave 41 du tronçon courbe 34, et le deuxième tronçon rectiligne 36 se situe du côté convexe 43 du tronçon courbe 34, de sorte que les premiers et deuxièmes tronçons rectilignes 32, 36 se trouvent de part et d'autre du tronçon courbe 34. Les deux tronçons rectilignes 32, 36 forment aux points intermédiaires 33, 35 des angles aigus avec les tangentes locales au tronçon courbe 34. Ces angles sont par exemple sensiblement compris entre 45°et 90°.

Avantageusement, ces points intermédiaires 33, 35 présentent des arrondis au niveau des angles.

Les première et deuxième biellettes sont réalisées d'une seule pièce et présentent une structure rigide.

La longueur du premier tronçon rectiligne 32 est avantageusement supérieure à la distance séparant l'axe A-A' du bord supérieur 18 de l'ouverture 14 et est par exemple comprise entre 250 mm et 350 mm et. La longueur du deuxième tronçon rectiligne 36 est par exemple comprise entre 50 mm et 150 mm. La longueur du tronçon courbe 34 est par exemple comprise entre 400 mm et 750 mm.

La deuxième biellette 30 comporte une première extrémité 38 et une seconde extrémité 40, reliées par un tronçon sensiblement rectiligne 39. La première extrémité 38 de la deuxième biellette 30 est munie d'une liaison de type pivot propre à articuler la deuxième biellette 30 en rotation par rapport à la structure de caisse. La seconde extrémité 40 de la deuxième biellette 30 est munie d'une liaison de type pivot propre à articuler la deuxième biellette 30 au hayon 20.

Chacune des premières extrémités 31, 38 des première et deuxième biellettes 28, 30 est reliée de manière articulée au bord latéral 16 de l'ouverture 14. En particulier, la première biellette 28 et la deuxième biellette 30 sont décalées le long du bord latéral de l'ouverture 16 selon un axe dans le plan de l'ouverture 14 suivant sensiblement le premier bord latéral de l'ouverture 16.

Plus particulièrement, la première extrémité 31 de la première biellette 28 est articulée autour d'un axe de rotation A-A', transversal et dans le plan de l'ouverture 14. La première extrémité 38 de la deuxième biellette 30 est articulée autour d'un axe de rotation B-B', transversal et dans le plan de l'ouverture 14. L'axe A-A' se trouve au-dessus de l'axe B-B' et au voisinage du bord supérieur de l'ouverture 18. Dans les conditions d'utilisation normales, le véhicule étant à plat sur une surface horizontale, les axes A-A' et B-B' sont horizontaux.

Chacune des secondes extrémités 37, 40 des première et deuxième biellettes est reliée de manière articulée au hayon 20. Selon un mode de réalisation, chacune des secondes extrémités 37, 40 des première et deuxième biellettes est reliée de manière articulée et coulissante à un rail 42 fixé sur le hayon 20, sensiblement parallèle au premier bord latéral de hayon 22. Les premières et secondes extrémités des première et deuxième biellettes (31, 37, 38, 40) forment les sommets d'un parallélogramme, en position de fermeture, tel que représenté sur la Figure 1.

Selon un mode de réalisation, l'ensemble arrière 10 présente une symétrie par rapport à un plan vertical longitudinal du véhicule.

Le dispositif d'ouverture et de fermeture 26 comprend alors une troisième biellette et une quatrième biellette, non représentées sur les Figures 1 à 3.

La troisième biellette et la quatrième biellette sont alors fixées et disposées de façon analogue à la première biellette 28 et à la deuxième biellette 30, respectivement.

En particulier, la troisième biellette est sensiblement identique à la première biellette et présente la même forme. De même, la quatrième biellette est sensiblement identique à la deuxième biellette et présente la même forme. De manière symétrique aux première et deuxième biellettes, les troisièmes et quatrièmes biellettes sont reliées, de manière articulée, au deuxième bord latéral de l'ouverture 14 par leurs premières extrémités, et, de manière articulée par leurs secondes extrémités au hayon 20. Selon un mode de réalisation précédemment décrit, elles sont reliées de manière articulée et coulissante à un deuxième rail fixé sur le hayon 20, sensiblement parallèle au deuxième bord latéral de hayon.

Les troisième et quatrième biellettes sont décalées le long du second bord latéral de l'ouverture 14. En particulier, la première extrémité de la troisième biellette est articulée en rotation autour de l'axe A-A' et la première extrémité de la troisième biellette est articulée en rotation autour de l'axe B-B'.

Le fonctionnement de l'ensemble arrière 10 selon l'invention va maintenant être décrit.

Initialement, un ensemble arrière 10 est fourni, le hayon 20 se trouvant en position de fermeture telle qu'illustré par la Figure 1. Dans cette position initiale, le tronçon courbe 34 de la première biellette 28 se trouve en dessous de la première extrémité 31 de la première biellette 28. La seconde extrémité 37 de la première biellette 28 se trouve à l'extrémité supérieure du rail 42.

Lorsque l'utilisateur souhaite dégager l'accès à l'ouverture 14 de la structure de caisse 12, il active le mouvement du hayon 20, par exemple manuellement ou de manière automatisée. Dans le cas d'une ouverture manuelle, au moins un vérin d'assistance et de sécurité est ajouté à l'ensemble arrière 10. Dans le cas d'une ouverture automatisée, au moins un moteur, propre à mettre en rotation la deuxième biellette 30 autour de l'axe B-B' est ajouté à l'ensemble arrière 10, ainsi qu'un ensemble de pilotage propre à fournir la cinématique d'ouverture adéquate.

Le hayon 20 passe d'une position de fermeture à une position d'ouverture en faisant tourner les première 28 et deuxième 30 biellettes autour des axes de rotation respectifs A-A' et B-B'. Le parallélogramme formé par les premières et secondes extrémités des première et deuxième biellettes (31, 37, 38, 40) se déforme au cours de la rotation des première et deuxième biellettes, comme on peut le voir sur les Figures 1 à 3.

Au cours du mouvement, le tronçon courbe 34 de la première biellette 28 passe à proximité de la première extrémité 38 de la deuxième biellette 30, sans contact entre la première biellette 28 et la deuxième biellette 30. Un tel agencement permet d'avoir un dispositif d'ouverture et de fermeture compact et peu encombrant.

Les secondes extrémités 37, 40 des première et deuxième biellettes suivent un mouvement combiné de rotation et de glissement le long du rail 42. La composante de translation du mouvement des secondes extrémités 37, 40 n'est possible qu'à partir d'un angle minimal d'ouverture parcouru par les première et seconde biellettes dans leur rotation par rapport à leur position initiale. Par exemple, cet angle d'ouverture minimal pour permettre un mouvement de translation des secondes extrémités 37, 40 est compris entre 10° et 30°.

L'ensemble arrière 10 passe par une position intermédiaire illustrée par la Figure 2, où les première 28 et deuxième 30 biellettes font saillie hors de l'ouverture 14 et leurs secondes extrémités 37, 40 sont en glissement le long du rail 42.

L'ensemble arrière 10 arrive à une position d'ouverture illustrée par la Figure 3, où la seconde extrémité 40 de la deuxième biellette 30 arrive en butée à l'extrémité inférieure du rail 42 et se bloque pour empêcher le glissement. Le hayon 20 est alors positionné au-dessus du toit du véhicule et dégage l'accès à l'ouverture 14. Le tronçon courbe 34 de la première biellette 28 contourne alors le bord supérieur 18 de l'ouverture, de sorte que la première biellette 28 n'entre pas en contact avec le bord supérieur de l'ouverture 18 ni avec le toit du véhicule, notamment du fait de la longueur du premier tronçon rectiligne 32 et de la forme du tronçon courbe 34 de la première biellette 28.

La cinématique de fermeture est l'inverse de la cinématique d'ouverture, le blocage du glissement sur le rail 42 étant levé au début de l'opération par l'utilisateur.

Ce mouvement du hayon 20 ne nécessite que peu d'espace, le hayon 20 suivant de près la forme du véhicule lors de son déplacement, et finissant sa course au-dessus du toit. Les risques de choc entre le hayon et l'environnement ou l'utilisateur sont faibles grâce à la faible amplitude du mouvement du hayon au cours de l'ouverture et de la fermeture.

## Revendications

1. Ensemble arrière (10) de véhicule comprenant :
- une structure de caisse (12), la structure de caisse (12) délimitant une ouverture (14) comprenant au moins un premier bord latéral de l'ouverture (16) et un deuxième bord latéral de l'ouverture,
- un hayon (20), le hayon (20) étant mobile par rapport à la structure de caisse (12) entre au moins une position d'ouverture, dans laquelle l'ouverture (14) de la structure de caisse (12) est accessible, et une position de fermeture, dans laquelle le hayon (20) ferme l'ouverture (14) de la structure de caisse (12), le hayon (20) comprenant au moins un premier bord latéral de hayon (22) et un deuxième bord latéral de hayon,
- un dispositif d'ouverture et de fermeture (26), le dispositif d'ouverture et de fermeture (26) comprenant au moins une première biellette (28) et une deuxième biellette (30) fixant le hayon (20) à la structure de caisse (12), lesdites première (28) et deuxième (30) biellettes étant chacune articulées, à une première extrémité (31 ; 38), à la structure de caisse (12) et, à une seconde extrémité (37 ; 40), au premier bord latéral de hayon (22),
**caractérisé en ce que** la première biellette (28) comprend, de sa première extrémité (31) à un premier point intermédiaire (33), un premier tronçon sensiblement rectiligne (32), du premier point intermédiaire (33) à un deuxième point intermédiaire (35), un tronçon sensiblement courbe (34), et du deuxième point intermédiaire (35) à la seconde extrémité (37), un deuxième tronçon sensiblement rectiligne (36), le premier tronçon sensiblement rectiligne (32) se trouvant du coté concave (41) du tronçon sensiblement courbe (34) et le deuxième tronçon sensiblement rectiligne (36) se trouvant du coté convexe (43) du tronçon sensiblement courbe (34), et **en ce que** les secondes extrémités (37 ; 40) des première (28) et deuxième (30) biellettes sont coulissantes sur un rail (42) fixé sur le hayon (20), sensiblement parallèle au premier bord de hayon (22), ledit rail étant sensiblement parallèle au plan de l'ouverture (14) en position de fermeture du hayon (20).

2. Ensemble arrière (10) de véhicule selon la revendication 1, dans lequel la première biellette (28) et la deuxième biellette (30) sont décalées le long du premier bord latéral (16) de l'ouverture (14).

3. Ensemble arrière (10) de véhicule selon l'une quelconque des revendications 1 ou 2, dans lequel le premier tronçon sensiblement rectiligne (32) et le deuxième tronçon sensiblement rectiligne (36) de la première biellette forment des angles aigus avec les tangentes au tronçon sensiblement courbe (34) respectivement au premier point intermédiaire (33) et au deuxième point intermédiaire (35).

4. Ensemble arrière (10) de véhicule selon l'une quelconque de revendications 1 à 3, dans lequel la première biellette (28) présente des angles arrondis au niveau des points intermédiaires (33 ; 35) entre le tronçon sensiblement courbe (34) et les premier (32) et deuxième (36) tronçons sensiblement rectilignes.

5. Ensemble arrière (10) de véhicule selon l'une quelconque des revendications 1 à 4, dans lequel le dispositif d'ouverture et de fermeture (26) comprend une troisième biellette et une quatrième biellette, la troisième biellette et la quatrième biellette étant fixées entre la structure de caisse (12) et le deuxième bord latéral de hayon, la troisième biellette ayant une forme identique à la forme de la première biellette (28) et la quatrième biellette ayant une forme identique à la forme de la deuxième biellette (30).

6. Ensemble arrière (10) de véhicule selon l'une quelconque des revendications 1 à 5, dans lequel au moins une des première (28) et deuxième (30) biellette est munie de moyens de motorisation propres à commander la rotation de la première (28) ou deuxième (30) biellette autour de sa première extrémité (31 ; 38), articulée à la structure de caisse (12).

7. Ensemble arrière (10) de véhicule selon l'une quelconque des revendications 1 à 6, dans lequel la première biellette (28) contourne au moins en partie le bord supérieur de l'ouverture (18) en position d'ouverture.

8. Ensemble arrière (10) de véhicule selon l'une quelconque des revendications 1 à 7, dans lequel la structure de caisse (12) et le hayon (20) ne sont reliés que par le dispositif d'ouverture et de fermeture (26).

## Patentansprüche

1. Fahrzeugheckanordnung (10) umfassend:
- eine Karosseriestruktur (12), wobei die Karosseriestruktur (12) eine Öffnung (14) begrenzt, die mindestens einen ersten Seitenrand der Öffnung (16) und einen zweiten Seitenrand der Öffnung umfasst,
- eine Heckklappe (20), wobei die Heckklappe (20) in Bezug auf die Karosseriestruktur (12) zwischen mindestens einer Offenstellung, in der die Öffnung (14) der Karosseriestruktur (12) zugänglich ist, und einer Schließstellung, in der die Heckklappe (20) die Öffnung der Karosseriestruktur (12) verschließt, beweglich ist, wobei die Heckklappe (20) mindestens einen ersten Seitenrand (22) der Heckklappe und einen zweiten Seitenrand der Heckklappe umfasst,
- eine Öffnungs/Schließvorrichtung (26), wobei die Öffnungs/Schließvorrichtung (26) mindestens eine erste Koppelstange (28) und eine zweite Koppelstange (30), die die Heckklappe an der Karosseriestruktur (12) befestigen, umfasst, wobei die erste (28) und zweite (30) Koppelstange jeweils an einem ersten Ende (31; 38) an der Karosseriestruktur (12) und an einem zweiten Ende (37; 40) an dem ersten Seitenrand der Heckklappe (22) angelenkt sind,
**dadurch gekennzeichnet, dass** die erste Koppelstange (28) von ihrem ersten Ende (31) zu einem ersten Zwischenpunkt (33) einen ersten im Wesentlichen geradlinigen Abschnitt (32), vom ersten Zwischenpunkt (33) zu einem zweiten Zwischenpunkt (35) einen im Wesentlichen gekrümmten Abschnitt (34) und vom zweiten Zwischenpunkt (35) zum zweiten Ende (37), einen zweiten im wesentlichen geradlinigen Abschnitt (36) umfasst, wobei der erste im Wesentlichen geradlinige Abschnitt (32) sich an der konkaven Seite (41) des im Wesentlichen gekrümmten Abschnitts (34) befindet und der zweite im Wesentlichen geradlinige Abschnitt (36) sich an der konvexen Seite (43) des im Wesentlichen gekrümmten Abschnitts (34) befindet und dass die zweiten Enden (37; 40) der ersten (28) und zweiten (30) Koppelstange auf einer an der Heckklappe (20) befestigten Schiene (42), die im Wesentlichen parallel zum ersten Rand der Heckklappe (22) ist, gleitend sind, wobei die Schiene im Wesentlichen parallel zur Ebene der Öffnung (14) in der Schließstellung der Heckklappe (20) ist.

2. Fahrzeugheckanordnung (10) nach Anspruch 1, bei der die erste Koppelstange (28) und die zweite Koppelstange (30) entlang des ersten Seitenrandes (16) der Öffnung (14) versetzt sind.

3. Fahrzeugheckanordnung (10) nach einem beliebigen der Ansprüche 1 oder 2, bei der der erste im Wesentlichen geradlinige Abschnitt (32) und der zweite im Wesentlichen geradlinige Abschnitt (36) der ersten Koppelstange mit den Tangenten an dem im Wesentlichen gekrümmten Abschnitt (34) jeweils am ersten Zwischenpunkt (33) und am zweiten Zwischenpunkt (35) spitze Winkel bilden.

4. Fahrzeugheckanordnung (10) nach einem beliebigen der Ansprüche 1 bis 3, bei der die erste Koppelstange (28) an den Zwischenpunkten (33; 35) zwischen dem im Wesentlichen gekrümmten Abschnitt (34) und dem ersten (32) und zweiten (36) im Wesentlichen geradlinigen Abschnitt abgerundete Winkel aufweist.

5. Fahrzeugheckanordnung (10) nach einem beliebigen der Ansprüche 1 bis 4, bei dem die Öffnungs/Schließvorrichtung (26) eine dritte Koppelstange und eine vierte Koppelstange umfasst, wobei die dritte Koppelstange und die vierte Koppelstange zwischen der Karosseriestruktur (12) und dem zweiten Seitenrand der Heckklappe befestigt sind und die dritte Koppelstange eine zu der Form der ersten Koppelstange (28) identische Form aufweist und die vierte Koppelstange eine zu der Form der zweiten Koppelstange (30) identische Form aufweist.

6. Fahrzeugheckanordnung (10) nach einem beliebigen der Ansprüche 1 bis 5, bei der mindestens eine der ersten (28) und zweiten (30) Koppelstangen mit Motorisierungsmitteln versehen ist, die geeignet sind, die Drehung der ersten (28) oder zweiten (30) Koppelstange um ihr erstes Ende (31; 38), das an der Karosseriestruktur (12) angelenkt ist, zu steuern.

7. Fahrzeugheckanordnung (10) nach einem beliebigen der Ansprüche 1 bis 6, bei der die erste Koppelstange (28) in der offenen Stellung mindestens teilweise um den oberen Rand der Öffnung (18) herumgeht.

8. Fahrzeugheckanordnung (10) nach einem beliebigen der Ansprüche 1 bis 7, bei der die Karosseriestruktur (12) und die Heckklappe (20) nur durch die Öffnungs/Schließvorrichtung (26) verbunden sind.

## Claims

1. Rear vehicle assembly (10) comprising:
- a body structure (12), wherein the body structure (12) delimits an opening (14) comprising at least a first lateral edge of the opening (16) and a second lateral edge of the opening,
- a tailgate (20), wherein the tailgate (20) is movable relative to the body structure (12) between at least one open position, where the opening (14) of the body structure (12) is accessible, and a closed position, where the tailgate (20) closes the opening (14) of the body structure (12), and wherein the tailgate (20) comprises at least one first tailgate lateral edge (22) and a second tailgate lateral edge,
- an opening and closing device (26), wherein the opening and closing device (26) comprises at least one first connecting rod (28) and one second connecting rod (30) fixing the tailgate (20) to the body structure (12), wherein the first connecting rod (28) and the second connecting rod (30) are each hinged at a first end (31; 38) to the body structure (12) and at a second end (37; 40) to the first tailgate lateral edge (22),
**characterized in that**
the first connecting rod (28) comprises a first substantially rectilinear section (32) from its first end (31) to a first intermediate point (33), a substantially curved section (34) from the first intermediate point (33) to a second intermediate point (35), and a second substantially rectilinear section (36) from the second intermediate point (35) to the second end (37), wherein the first substantially rectilinear section (32) is located on the concave side (41) of the substantially curved section (34) while the second substantially rectilinear section (36) is located on the convex side (43) of the substantially curved section (34), and **in that** the second ends (37; 40) of the first connecting rod (28) and the second connecting rod (30) slide on a rail (42) fixed on the tailgate (20) that is substantially parallel to the first tailgate edge (22), wherein the rail is substantially parallel to the plane of the opening (14) in the closed position of the tailgate (20).

2. Vehicle rear assembly (10) according to claim 1, wherein the first connecting rod (28) and the second connecting rod (30) are offset along the first lateral edge (16) of the opening (14).

3. Vehicle rear assembly (10) according to any of the claims 1 or 2, wherein the first substantially rectilinear section (32) and the second substantially rectilinear section (36) of the first connecting rod form acute angles with the tangents to the substantially curved section (34) at the first intermediate point (33) and at the second intermediate point (35) respectively.

4. Vehicle rear assembly (10) according to any of the claims 1 to 3, wherein the first connecting rod (28) has rounded corners at the intermediate points (33; 35) between the substantially curved section (34) and the first substantially rectilinear section (32) and the second substantially rectilinear section (36).

5. Vehicle rear assembly (10) according to any one of the claims 1 to 4, wherein the opening and closing device (26) comprises a third connecting rod and a fourth connecting rod, wherein the third connecting rod and the fourth connecting rod are fixed between the body structure (12) and the second tailgate lateral edge, wherein the third connecting rod has a shape that is identical to the shape of the first connecting rod (28), while the fourth connecting rod has a shape that is identical to the shape of the second connecting rod (30).

6. Rear assembly (10) of a vehicle according to any one of the claims 1 to 5, wherein at least one of the first connecting rods (28) and the second connecting rods (30) is provided with drive means designed to control the rotation of the first connecting rod (28) and the second connecting rod (30) about its first end (31; 38) hinged to the body structure (12).

7. Vehicle rear assembly (10) according to any one of the claims 1 to 6, wherein the first connecting rod (28) at least partially circumvents the upper edge of the opening (18) in the open position.

8. Vehicle rear assembly (10) according to any one of the claims 1 to 7, wherein the body structure (12) and the tailgate (20) are only connected by the opening and closing device (26).
